# EUROPÄISCHE PATENTSCHRIFT

(11) **EP 0 609 283 B1**
(45) Veröffentlichungstag und Bekanntmachung des Hinweises auf die Patenterteilung: **05.07.1995**
(21) Anmeldenummer: 92921344.5
(22) Anmeldetag: 13.10.1992
(51) Int. Cl.: G11B 7/09

(54) **OPTISCHE ABTASTVORRICHTUNG MIT EINEM LINSENHALTER**
OPTICAL SCANNING DEVICE WITH LENS-HOLDER
DISPOSITIF DE BALAYAGE OPTIQUE A PORTE-LENTILLE

(30) Priorität: 22.10.1991 DE 4134803
(43) Veröffentlichungstag der Anmeldung: 10.08.1994
(73) Patentinhaber: DEUTSCHE THOMSON-BRANDT GMBH, 78048 Villingen-Schwenningen (DE)
(72) Erfinder: SUZUKI, Tsuneo, D-7733 Mönchweiler (DE); RÖSLER, Raimund, D-7740 Triberg (DE); STORZ, Stefanie, D-7741 Tennenbronn (DE); HAUSER, Günter, D-7732 Niedereschach (DE); LASER, Olaf, D-7730 Villingen (DE); LOOSER, Peter, D-7742 St. Georgen (DE); MARUYAMA, Shunichi, D-7730 Villingen (DE)
(86) Internationale Anmeldenummer: EP9202355
(87) Internationale Veröffentlichungsnummer: WO9308566

(56) Entgegenhaltungen:
- EP-A- 0 144 445
- EP-A- 0 287 235
- EP-A- 0 379 757
- PATENT ABSTRACTS OF JAPAN vol. 10, no. 324 (P-512)(2380) 5. November 1986

## Beschreibung

Die vorliegende Erfindung betrifft eine optische Abtastvorrichtung, die mit einem Linsenhalter ausgestattet ist, der um eine Achse drehbar gelagert ist und an dessen einem Ende eine Linse sitzt, die ferner mit zwei elektrisch leitenden elastischen Befestigungselementen ausgerüstet ist, die an einem Gehäuse befestigt sind und über die mindestens eine auf dem Linsenhalter angeordnete Spule mit Strom aus einer Spannungsquelle versorgt wird.

Derartige optische Abtastvorrichtungen werden z.B. in CD-Spielern eingesetzt, um mittels eines Lichtstrahls die Daten einer optischen Kompaktplatte, einer sogenannten CD, lesen zu können.

Eine Objektivlinse, mittels der ein Lichtstrahl auf die Platte fokussiert wird, sitzt auf einem Linsenhalter, der um eine Achse drehbar gelagert ist, damit die Objektivlinse bezüglich der Platte in radialer Richtung bewegbar ist. Damit die Objektivlinse den Lichtstrahl auf die Platte fokussieren kann, ist der Linsenhalter in Richtung der optische Achse der Objektivlinse bewegbar. Der Linsenhalter ist an einem Gehäuse drehbar befestigt, das in radialer Richtung bezüglich der Platte bewegbar ist. Es ist z.B. bekannt, das Gehäuse auf eine Spindel zu setzen, so daß es durch Drehen der Spindel in radialer Richtung über die Datenspuren der Platte bewegt werden kann. Dieser meist als Grobantrieb bezeichnete Mechanismus dient dazu, die Objektivlinse über jeder beliebigen Datenspur der Platte positionieren zu können. Durch die bereits erwähnte Drehbewegung des Linsenhalters relativ zum Gehäuse läßt sich die Objektivlinse genauer oder feiner über den Datenspuren positionieren. Man spricht deshalb vom sogenannten Feinantrieb.

Die vertikale Bewegung entlang der optischen Achse der Objektivlinse und die Drehbewegung des Linsenhalters werden mittels Spulen bewirkt, die entweder am Gehäuse, am Linsenhalter oder an beiden Teilen angeordnet sind. Als Gegenstück zu den Spulen sind meist Magnete vorgesehen, um zwischen den Spulen und den Magneten eine magnetische Kraftwirkung zu erzielen.

An eine derartige optische Abtastvorrichtung werden gleichzeitig mehrere Anforderungen gestellt: Damit bereits geringe magnetische Kräfte eine Hub- und eine Drehbewegung der Objektivlinse bewirken, sollte der Linsenhalter wenig Masse haben und leichtgängig drehbar sowie auf- und abbewegbar sein.

Wenn die Spulen auf dem beweglichen Linsenhalter sitzen, sind elektrische Drähte als Zuleitungen vorzusehen. Diese Drähte erhöhen aber nicht nur das Gewicht des Linsenhalters, sondern sie vergrößern auch den mechanischen Widerstand gegenüber den Dreh- und Hubbewegungen des Linsenhalters, weil sie dessen Beweglichkeit einschränken. Schließlich sollte die optische Abtastvorrichtung möglichst preiswert in Serie herstellbar sein.

Aus der EP-A-0 287 235 ist, gemäß dem einleitenden Teil des Anspruchs 1, eine optische Abtastvorrichtung mit einem Linsenhalter bekannt, der mittels zweier Arme an einem Gehäuse befestigt ist. Um die auf dem Linsenhalter angeordneten Spulen mit Strom zu versorgen, sind die beiden Arme aus elektrisch leitendem Material hergestellt. Die Stromzufuhr zu den Spulen erfolgt über diese beiden Arme.

Es ist deshalb Aufgabe der Erfindung, eine optische Abtastvorrichtung mit einem Linsenhalter, der um eine Achse drehbar ist und an dessen einem Ende eine Linse sitzt, so zu gestalten, daß sie preiswert herstellbar ist und daß deren Linsenhalter sich durch geringe Masse und geringe mechanische Reibung auszeichnet.

Die Erfindung löst diese Aufgabe dadurch, daß die beiden Enden der Achse in je einem der beiden elektrisch leitenden elastischen Befestigungselemente elektrisch leitend gelagert sind, daß die beiden Enden der Achse elektrisch leitend aber gegeneinander elektrisch isoliert sind, daß der Strom von der Spannungsquelle zur Spule über das obere Befestigungselement und das obere Ende der Achse fließt und von der Spule über das untere Ende der Achse und das untere Befestigungselement zurück zur Spannungsquelle fließt.

Es zeigen
Figur 1 ein Ausführungsbeispiel der Erfindung in Draufsicht
Figur 2 das Ausführungsbeispiel von unten
Figur 3 das Ausfuhrungsbeispiel in Seitenansicht.

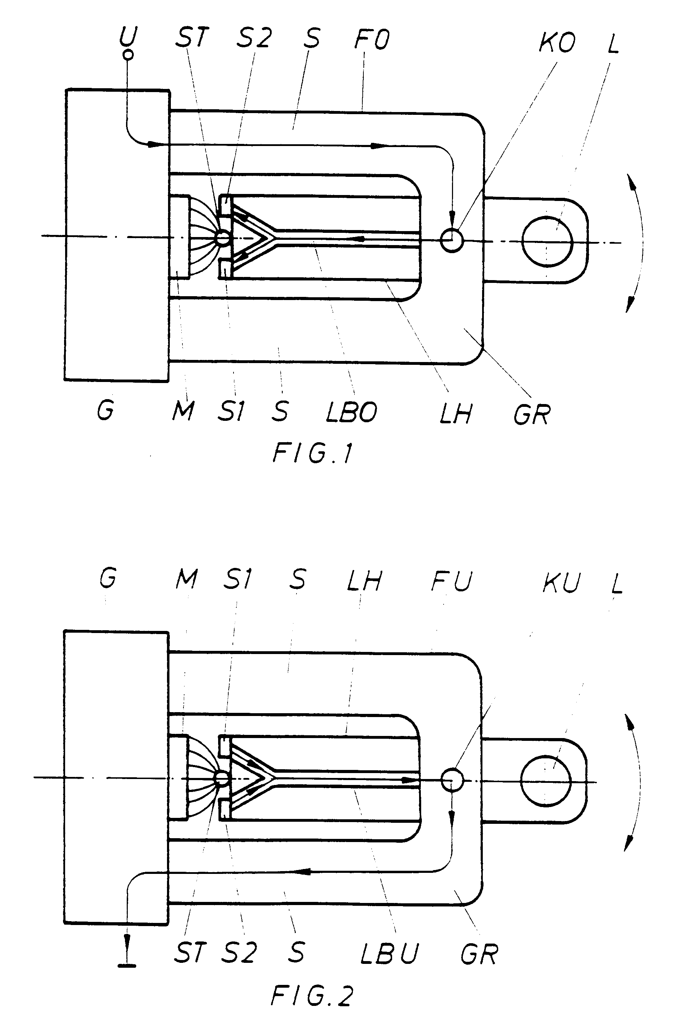

Anhand des in den Figuren 1, 2 und 3 gezeigten Ausführungsbeispieles wird die Erfindung nun erläutert.

In der Figur 1 hat das obere Befestigungselement FO, das beispielsweise als Blattfeder ausgeführt ist, die Form eines Bügels. Die Schenkel S der bügelförmigen oberen Blattfeder FO sind an einem Gehäuse G befestigt. In der Mitte des Griffes GR der oberen Blattfeder FO ist ein kegelförmiges Lager KO für eine als Drehachse vorgesehene Nadel N angebracht. Unter der oberen Blattfeder FO liegt ein Linsenhalter LH, an dessen einem Ende eine Objektivlinse L sitzt. Der Linsenhalter LH ist mittels der Nadel N drehbar zwischen der oberen Blattfeder FO und einer unteren Blattfeder FU gelagert, die in Figur 2 zu sehen ist.

Am anderen Ende des Linsenhalters LH sind zwei Spulen S1 und S2 angeordnet. Gegenüber den Spulen S1 und S2 ist am Gehäuse G ein Magnet M befestigt. Auf der Oberseite des Linsenhalters LH verläuft von der Nadel N zu den beiden Spulen S1 und S2 eine Leiterbahn LBO. Zwischen den beiden Spulen S1 und S2 ist ein Metallstift ST angeordnet.

Figur 2 zeigt das Ausführungsbeispiel von unten. Die beiden Schenkel S der als unteres Befestigungselement vorgesehenen unteren Blattfeder FU sind ebenfalls am Gehäuse G befestigt. In der Mitte des Griffes GR der unteren Blattfeder FU ist ebenfalls wie bei der oberen Blattfeder FO ein kegelförmiges Lager KU für die Nadel N vorgesehen. An einem Schenkel S der unteren Blattfeder FU ist ein Masseanschluß vorgesehen. Auf der Unterseite des Linsenhalters LH führt wie auf der Oberseite von der Nadel N eine elektrische Leiterbahn LBU zu den Spulen S1 und S2.

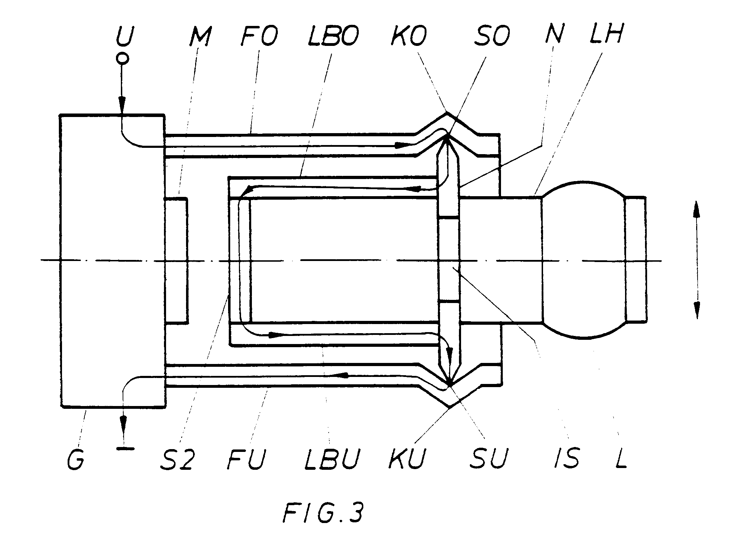

Figur 3 zeigt das Ausführungsbeispiel in Seitenansicht.

Am Gehäuse G sind die obere Blattfeder FO und die untere Blattfeder FU befestigt. Zwischen den Befestigungspunkten der beiden Blattfedern FO und FU ist am Gehäuse G der Magnet M angeordnet. Die Nadel N, deren obere Spitze SO im Lager KO der oberen Blattfeder FO und deren untere Spitze SU im Lager KU der unteren Blattfeder FU gelagert ist, trägt den Linsenhalter LH, an dessen einem Ende die Objektivlinse L sitzt und dessen anderes dem Magneten M gegenüberliegendes Ende die Spulen S1 und S2 trägt.

Die Spitzen SO und SU der Nadel N sind aus elektrisch leitendem Material gefertigt und mittels eines Isolators IS gegeneinander isoliert. An der oberen Blattfeder FO oder am Gehäuse G ist ein Anschluß für eine Spannungsquelle U vorgesehen, von welcher der Strom über die obere Blattfeder FO, deren Lager KO, die obere Spitze SO der Nadel N und die Leiterbahn LBO auf der Oberseite des Linsenhalters LH zu den Spulen S1 und S2 fließt. Von den Spulen S1 und S2 fließt der Strom über die Leiterbahn LBU auf der Unterseite des Lichthalters LH, die untere Spitze SU der Nadel N, das Lager KU der unteren Blattfeder SU und der unteren Blattfeder FU zu einem Masseanschluß, der entweder an der unteren Blattfeder FU oder an deren Befestigungspunkt am Gehäuse G vorgesehen ist.

Durch Bestromen der Spulen S1 und S2 läßt sich der Linsenhalter LH in Abhängigkeit von der Stromrichtung um die Nadel N als Drehachse nach links oder rechts drehen. Der Metallstift ST, der in der Mitte zwischen den beiden Spulen S1 und S2 angeordnet ist, hält den Linsenhalter LH bei stromlosen Spulen in einer Mittellage, weil zwischen ihm und dem Magneten eine Kraftwirkung auftritt.

Weil die obere und untere Blattfeder FU und FO nicht nur den Linsenhalter LH mechanisch mit dem Gehäuse G verbinden, sondern gleichzeitig auch als elektrische Leitung für den Spulenstrom dienen, sind keine zusätzlichen Drähte mehr erforderlich, die den Reibungswiderstand und die Masse des Linsenhalters LH vergrößern. Die Erfindung erfüllt daher die Forderung nach geringer Masse und geringer Reibung.

Weil die Erfindung aus nur wenigen leicht herstellbaren einfachen Teilen besteht, läßt sie sich leicht und preiswert herstellen. Weil die Stromversorgung der Spulen über die Befestigungselemente - die beiden Blattfedern - erfolgt, ist es nicht mehr erforderlich, Drähte an den beweglichen Linsenhalter LH zu löten. Damit ist auch die Forderung nach leichter Herstellbarkeit erfüllt.

Weil elastische Befestigungselemente - zwei Blattfedern - zur Befestigung des Linsenhalters vorgesehen sind, läßt sich die Objektivlinse L auch in Richtung ihrer optischen Achse bewegen, um den Lichtstrahl auf die Platte fokussieren zu können. Die am einen Ende des Linsenhalters LH angeordneten Spulen S1 und S2 können mit dem Magneten M zusammenwirkend deshalb entweder dazu dienen, den Linsenhalter LH zur Spurführung um die Achse N zu drehen oder die Objektivlinse L zur Fokussierung entlang ihrer optischen Achse zu bewegen.

Bei der in den Figuren 1, 2, und 3 gezeigten Anordnung handelt es sich um ein Ausführungsbeispiel. Die Form der elastischen Befestigungselemente ist ebenso beliebig wie die Form der Lager. Es kommt nur darauf an, daß der Strom für die Spulen über die Lager und die Befestigungselemente fließt, so daß elektrische Zuleitungen überflüssig werden.

Die Erfindung ist für optische Wiedergabegeräte und magnetooptische Aufzeichnungs- und/oder Wiedergabegeräte geeignet. Als Beispiele seien CD-Spieler, DRAW-DISC-Spieler und Videoplattenspieler genannt.

## Patentansprüche

1. Optische Abtastvorrichtung, die mit einem Linsenhalter (LH) ausgestattet ist, der um eine Achse (N) drehbar gelagert ist und an dessen einem Ende eine Linse (L) sitzt, die ferner mit zwei elektrisch leitenden elastischen Befestigungselementen (FO, FU) ausgerüstet ist, die an einem Gehäuse (G) befestigt sind und über die mindestens eine auf dem Linsenhalter (LH) angeordnete Spule (S1, S2) mit Strom aus einer Spannungsquelle (U) versorgt wird, **dadurch gekennzeichnet**, daß die beiden Enden (SO, SU) der Achse (N) in je einem der beiden elektrisch leitenden elastischen Befestigungselemente (FO, FU) elektrisch leitend gelagert sind, daß die beiden Enden (SO, SU) der Achse (N) elektrisch leitend aber gegeneinander elektrisch isoliert sind, daß der Strom von der Spannungsquelle (U) zur Spule (S1, S2) über das obere Befestigungselement (FO) und das obere Ende (SO) der Achse (N) fließt und von der Spule (S1, S2) über das untere Ende (SU) der Achse (N) und das untere Befestigungselement (FU) zurück zur Spannungsquelle (U) fließt.

2. Optische Abtastvorrichtung nach Anspruch 1, **dadurch gekennzeichnet**, daß als Achse eine Nadel (N) mit zwei Spitzen (SO, SU) vorgesehen ist und daß in den Befestigungselementen (FO, FU) je ein Nadellager (KO, KU) zur Lagerung der Nadel (N) vorgesehen ist.

3. Optische Abtastvorrichtung nach Anspruch 1 oder 2, **dadurch gekennzeichnet**, daß als Befestigungselemente zwei Blattfedern (FO, FU) vorgesehen sind.

4. Optische Abtastvorrichtung nach Anspruch 3, **dadurch gekennzeichnet**, daß die beiden Blattfedern (FO, FU) bügelförmig sind.

5. Optische Abtastvorrichtung nach Anspruch 4, **dadurch gekennzeichnet**, daß die beiden Schenkel (S) der bügelförmigen Blattfedern (FO, FU) am Gehäuse (G) befestigt sind und daß in der Mitte des Griffes (GR) der beiden Blattfedern (FO, FU) die Lager (KO, KU) für die Achse (N) vorgesehen sind.

6. Optische Abtastvorrichtung nach Anspruch 1, 2, 3, 4 oder 5, **dadurch gekennzeichnet**, daß auf der Oberseite des Linsenhalters (LH) von der Achse (N) eine erste Leiterbahn (LBO) zu einem Anschluß der Spule (S1, S2) und auf der Unterseite des Linsenhalters (LH) von der Achse (N) eine zweite Leiterbahn (LBU) zum anderen Anschluß der Spule (S1, S2) führt.

7. Optische Abtastvorrichtung nach Anspruch 1, 2, 3, 4, 5, oder 6, **dadurch gekennzeichnet**, daß am der Linse (L) gegenüberliegenden Ende des Linsenhalters (LH) zwei Spulen (S1, S2) angeordnet sind.

8. Optische Abtastvorrichtung nach Anspruch 1, 2, 3, 4, 5, 6 oder 7, **dadurch gekennzeichnet**, daß gegenüber der Spule beziehungsweise gegenüber den Spulen (S1, S2) ein Magnet (M) am Gehäuse (G) befestigt ist.

9. Optische Abtastvorrichtung nach Anspruch 8, **dadurch gekennzeichnet**, daß an dem der Linse (L) gegenüberliegenden Ende des Linsenhalters (LH) ein Stift (ST) aus ferroelektrischem Material derart befestigt ist, daß infolge der magnetischen Kraftwirkung zwischen dem Magneten (M) und dem Stift (ST) der Linsenhalter (LH) bei stromlosen Spulen (S1, S2) in einer Mittellage gehalten wird.

10. Optische Abtastvorrichtung nach Anspruch 9, **dadurch gekennzeichnet,** daß als Stift (ST) ein Metallstift mit kreisförmigem Querschnitt vorgesehen ist.

11. Optische Abtastvorrichtung nach Anspruch 9 oder 10, **dadurch gekennzeichnet**, daß der Stift (ST) zwischen den beiden Spulen (S1, S2) angeordnet ist.

## Claims

1. Optical scanning device which is equipped with a lens-holder (LH), which is supported so as to be rotatable about an axle (N) and on one end of which a lens (L) is seated, which device is further equipped with two electrically conductive, elastic fastening elements (FO, FU) which are fastened to a housing (G) and via which at least one coil (S1, S2), which is arranged on the lens-holder (LH), is supplied with current from a voltage source (U), characterized in that the two ends (SO, SU) of the axle (N) are each supported in an electrically conductive manner in one of the two electrically conductive, elastic fastening elements (FO, FU), in that the two ends (SO, SU) of the axle (N) are electrically conductive but electrically insulated with respect to each other, in that the current flows from the voltage source (U) to the coil (S1, S2) via the upper fastening element (FO) and the upper end (SO) of the axle (N) and from the coil (S1, S2) back to the voltage source (U) via the lower end (SU) of the axle (N) and the lower fastening element (FU).

2. Optical scanning device according to Claim 1, characterized in that a needle (N) having two points (SO, SU) is provided as axle and in that a needle bearing (KO, KU) is provided in each case in the fastening elements (FO, FU), for supporting the needle (N).

3. Optical scanning device according to Claim 1 or 2, characterized in that two leaf springs (FO, FU) are provided as fastening elements.

4. Optical scanning device according to Claim 3, characterized in that the two leaf springs (FO, FU) are bow-shaped.

5. Optical scanning device according to Claim 4, characterized in that the two limbs (S) of the bow-shaped leaf springs (FO, FU) are fastened to the housing (G) and in that the bearings (KO, KU) for the axle (N) are provided in the centre of the handle (GR) of the two leaf springs (FO, FU).

6. Optical scanning device according to Claim 1, 2, 3, 4 or 5, characterized in that on the upper side of the lens-holder (LH) a first conductor track (LBO) leads from the axle (N) to a connection of the coil (S1, S2) and on the underside of the lens-holder (LH) a second conductor track (LBU) leads from the axle (N) to the other connection of the coil (S1, S2).

7. Optical scanning device according to Claim 1, 2, 3, 4, 5 or 6, characterized in that two coils (S1, S2) are arranged on that end of the lens-holder (LH) which is opposite the lens (L).

8. Optical scanning device according to Claim 1, 2, 3, 4, 5, 6 or 7, characterized in that a magnet (M) is fastened to the housing (G), opposite the coil or coils (S1, S2).

9. Optical scanning device according to Claim 8, characterized in that a pin (ST) of ferroelectric material is fastened to that end of the lens-holder (LH) which is opposite the lens (L) in such a way that, as a consequence of the magnetic force effect between the magnet (M) and the pin (ST), the lens-holder (LH) is held in a central position when the coils (S1, S2) are current-free.

10. Optical scanning device according to Claim 9, characterized in that a métal pin of circular cross-section is provided as pin (ST).

11. Optical scanning device according to Claim 9 or 10, characterized in that the pin (ST) is arranged between the two coils (S1, S2).

## Revendications

1. Dispositif optique de lecture, qui est équipé d'un porte-lentille (LH), qui est monté tournant sur paliers autour d'un axe (N) et à une extrémité duquel est placée une lentille (L), qui est équipé en plus de deux éléments de fixation élastiques électroconducteurs (FO, FU), qui sont fixés à un boîtier (G) et à l'aide desquels est alimentée en courant en provenance d'une source de tension (U) au moins une bobine (S1, S2) disposée sur le porte-lentille (LH), caractérisé en ce que les deux extrémités (SO, SU) de l'axe (N) sont montés sur paliers de manière électroconductrice à chaque fois dans un des deux éléments de fixation élastiques électroconducteurs (FO, FU), en ce que les deux extrémités (SO, SU) de l'axe (N) sont électroconductrices, mais isolées électriquement l'une de l'autre, en ce que le courant s'écoule de la source de tension (U) vers la bobine (S1, S2) par l'intermédiaire de l'élément de fixation supérieur (FO) et de l'extrémité supérieure (SO) de l'axe (N) et s'écoule en retour de la bobine (S1, S2), par l'intermédiaire de l'extrémité inférieure (SU) de l'axe (N) et de l'élément de fixation inférieur (FU), vers la source de tension (U).

2. Dispositif optique de lecture selon la revendication 1, caractérisé en ce qu'il est prévu, en tant qu'axe, une aiguille (N) ayant deux pointes (SO, SU) et en ce qu'il est prévu, dans les éléments- de fixation (FO, FU), en vue du placement sur paliers de l'aiguille (N), à chaque fois un roulement à aiguilles (KO, KU).

3. Dispositif optique de lecture selon la revendication 1 ou 2, caractérisé en ce que sont prévus, en tant qu'éléments de fixation, deux ressorts à lames (FO, FU).

4. Dispositif optique de lecture selon la revendication 3, caractérisé en ce que les deux ressorts à lames (FO, FU) sont en forme d'étrier.

5. Dispositif optique de lecture selon la revendication 4, caractérisé en ce que les deux jambes (S) des ressorts à lames en forme d'étrier (FO, FU) sont fixées au boîtier (G) et en ce qu'il est prévu, au milieu de l'anse (GR) des deux ressorts à lames (FO, FU), des roulements (KO, KU) pour l'axe (N).

6. Dispositif optique de lecture selon la revendication 1, 2, 3, 4 ou 5, caractérisé en ce qu'une première piste conductrice (LBO) conduit, sur la face supérieure du porte-lentille (LH), de l'axe (N) à une connexion de la bobine (S1, S2) et en ce qu'une deuxième piste conductrice (LBU) conduit, sur la face inférieure du porte-lentille (LH), de l'axe (N) à l'autre connexion de la bobine (S1, S2).

7. Dispositif optique de lecture selon la revendication 1, 2, 3, 4, 5 ou 6, caractérisé en ce que deux bobines (S1, S2) sont disposées à l'extrémité du porte-lentille (LH) faisant face à la lentille (L).

8. Dispositif optique de lecture selon la revendication 1, 2, 3, 4, 5, 6, ou 7, caractérisé en ce qu'un aimant (M) est fixé au boîtier (G) en face de la bobine, respectivement en face des bobines (S1, S2).

9. Dispositif optique de lecture selon la revendication 8, caractérisé en ce qu'une pointe (ST) en matériau ferroélectrique est fixé à l'extrémité du porte-lentille (LH) faisant face à la lentille (L) de sorte que le porte-lentille (LH) soit maintenu, pour des bobines (S1, S2) démunies de courant, dans une position médiane du fait de l'effet dynamique magnétique entre l'aimant (M) et la pointe (ST).

10. Dispositif optique de lecture selon la revendication 9, caractérisé en ce qu'il est prévu, en tant que pointe (ST), une pointe métallique ayant une section transversale circulaire.

11. Dispositif optique de lecture selon la revendication 9 ou 10, caractérisé en ce que la pointe (ST) est disposée entre les deux bobines (S1, S2).
